Europäisches Patentamt

(19) European Patent Office

Office européen des brevets

(11) Publication number: **0 184 884**

**B1**

(12) **EUROPEAN PATENT SPECIFICATION**

(45) Date of publication of patent specification: **07.03.90**

(21) Application number: **85201971.0**

(22) Date of filing: **26.11.85**

(51) Int. Cl.⁵: **H 02 G 11/02, B 65 H 75/16**

(54) A surplus cord holder.

(30) Priority: **04.12.84 SE 8406111**

(43) Date of publication of application:
**18.06.86 Bulletin 86/25**

(45) Publication of the grant of the patent:
**07.03.90 Bulletin 90/10**

(84) Designated Contracting States:
**BE CH DE FR GB LI NL SE**

(56) References cited:
**FR-A-2 519 617**
**US-A-2 160 961**
**US-A-3 068 316**

(73) Proprietor: **Davidsson, Runo**
**Alphyddan 8365**
**S-54400 Hjo (SE)**

(72) Inventor: **Davidsson, Runo**
**Alphyddan 8365**
**S-54400 Hjo (SE)**

(74) Representative: **Ahlström, Erik**
**AHLPATENT AB Hemstigen 21**
**S-55266 Jönköping (SE)**

Courier Press, Leamington Spa, England.

## Description

This invention generally relates to a surplus cord holder for storing a slack of a cord of the kind generally defined in the preamble of claim 1. More specifically the invention is directed to cords for electrical and electronic appliances, although the invention, of course, is not restricted hereto.

Cords of lighting accessories and other electrical appliances have either a length which is initially dimensioned just for its intended use, or a length which is too great or too small. In those instances where the cord is too short an extension cord is often used which means that the total length of the composite cord becomes too great even in this instance. Apart from those cases where the cord is initially dimensioned just for its intended purpose, all cases do consequently have too long a cord.

Long cords entail risks of accidents, e.g. in that persons may stumble on the cord and in that pieces of furniture and other heavy objects may damage the cord when being moved which in its turn entails a risk of electrical shock or fire.

In view hereof so called cord or slack shorteners of different kinds have been devised. Thus, US—3 068 316 discloses a cord shortening holder comprising an elongated tubular shell. The shell ends are partially closed by radially inwardly directed, triangular, resilient teeth which define a star-like opening. The cord to be shortened is passed axially through the holder so that it projects from opposite ends. When pushing the end of the cord, e.g. an electric plug, into and out of the holder the flexible teeth of the shell ends are deflected and subsequently grip the cord frictionally. The surplus length of the cord, which it is desired to store in the holder, may be pushed into one or both ends of the holder whereupon it will fold or coil upon itself therein. The turns or coils of the stored portion of the cord extend in planes which are substantially traverse to the axial direction of the tubular cord holder.

Another cord holder of the prior art disclosed in US—2 160 961 also comprises an elongated, tubular shell having semi-spherical ends provided with openings, the dimensions of which are adapted to the cross dimension of the cord. The shell is comprised of two halves which may be resilient, at least in part, and are hingedly connected to each other along a generatrix of the tubular shell. This enables the shell to be opened and the cord to be introduced into the shell. The shell halves are maintained in their closed position either by the resiliency of the shell or by latch means. The surplus length of the cord is folded upon itself in the shell in a serpentine-like manner, the straight portions of the cord extending in the longitudinal direction of the shell.

## Summary of the invention

The principal object of the invention is to provide an improved surplus cord holder for storing a slack portion of a cord which is intended particularly for electrical appliances, such as lamps, radio and TV apparatus, loudspeakers and stereo equipments, telephones and so on, and also can be used in other fields of the technique.

Another object of this invention is to provide a cord holder for enclosing a surplus cord length and for gripping the cord at opposite ends of the surplus length to retain the surplus cord length in the holder.

A further object is to provide a cord holder which is simple in structure and presents a neat and ornamental appearance.

These objects are attained thanks to the fact that the surplus cord holder according to the invention is featured according to the characterizing clause of claim 1.

## Brief description of the drawings

Further features and advantages of the surplus cord holder according to the invention will become apparent from the following description and the annexed drawings which diagrammatically and as non-limiting example illustrate a preferred embodiment and in which:

Fig. 1 is a perspective side view of an empty cord holder according to the invention, without end cap;

Fig. 2 is a perspective side view of the cord holder after the completion of the slack insertion operation;

Fig. 3 is a partial perspective end view illustrating the end cap when fitted to the open end of the body of the cord holder after the insertion of the cord slack therein;

Fig. 4 is a cross sectional view on a larger scale of the encircled area A in Fig. 3;

Fig. 5 is a perspective view of said end cap;

Fig. 6 is a perspective view of an elastical clamping member for holding or supporting the surplus cord holder;

Fig. 7 is a perspective side view of the cord holder provided with the clamping member according to Fig. 6;

Fig. 8 is a side view of a cord with a slack folded several times upon itself;

Fig. 9 illustrates the first step of the introduction of the cord slack into the cord holder; and

Fig. 10 illustrates a subsequent step of the insertion operation.

## Description of the preferred embodiment

The principal component of the surplus cord holder according to the invention is an elongated, tubular shell 1 which has an open end 2 and is provided with a slot 3 extending longitudinally from end to end of the shell 1. The slot 3 is sufficiently wide to permit the introduction of a standard, two-conductor plug-in cord for electrical lamps and the like.

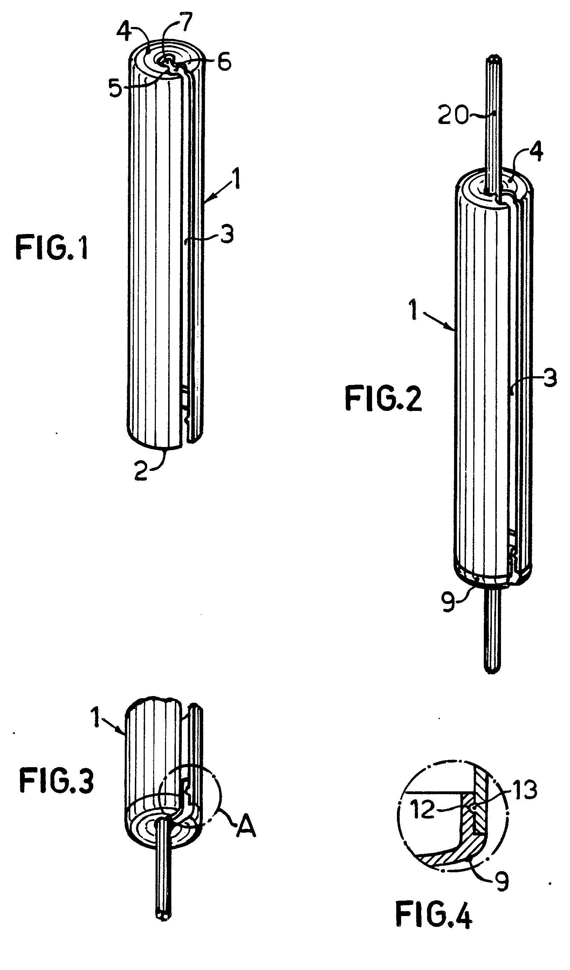

One end (the upper one in Figs. 1, 2, 7, 9 and 10) 4 of the shell is permanently closed by an end member 4 which is preferably integral with the shell 1. The end member has a slot which is generally designated 5 and constitutes a direct continuation of the slot 3 of the shell 1. The slot 5 comprises an enlargement 6 through which the cord can run freely, and a narrower inner end 7 which preferably is located centrally and so dimensioned that its edges frictionally engage the outer surface of said electrical standard cord.

With the other end of the shell 1 which has been left open at the manufacture of the shell there is associated an end cap which is generally designated 9 and is best shown in Figs. 3—5. The end cap 9 has a substantially radial slot which corresponds to the slot 5 of the other end of the shell 1 and is generally designated 10. Like slot 5 the slot 10 has a narrower end portion 11 which is preferably centrally located and which is so dimensioned that its edges frictionally engage the outer surface of the cord.

As is best shown in Fig. 4 the cap 9 is provided with a waist or annular recess 12 into which an internal, annular projection or upset 13 at the lower end 2 of the shell 1 is intended to snap in when the end cap 9 is joined to the shell.

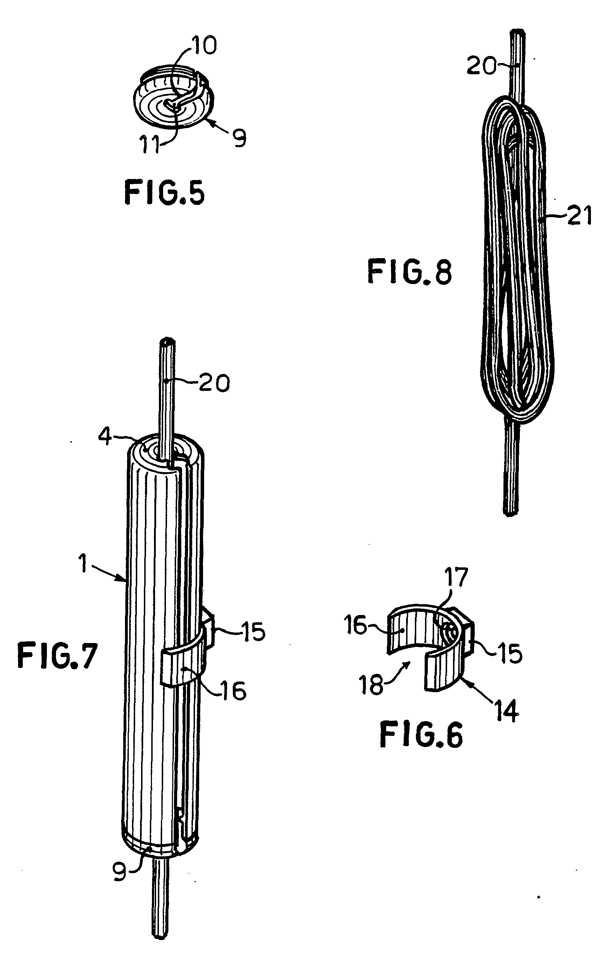

Fig. 6 illustrates an elastic clamping member or clamp associated with the shell 1 for holding or supporting the cord holder. The clamp which is generally designated 14 has a central body portion 15 from which two arcuate arms 16 extend in opposite directions. The body portion 15 has a through hole 17 for a screw or the like by means of which the clamp 14 may be secured to a wall panel or the like. The arms 16 have a curvature which conforms to that of the circumference of the shell 1, and a combined length exceeding half of the circumference of the shell 1. The gap 18 between the free ends of the arms 16 is less than the diameter or cross dimension of the shell 1. Thus, when the clamp 14 has been affixed to a wall or another support the cord holder can be pushed in through the gap 18 to be held in a frictional grip by the arms 16 of the clamp secured to the wall or the like. The elasticity or resiliency of the arms 16 is so proportioned that the cord holder comes loose at a slight pull in the cord, whereby damages to the cord are prevented.

Figs. 8—10 illustrate the insertion of a cord 20 having a surplus length or slack into the cord holder according to the invention. A length of the cord 20 corresponding to the slack is folded several times upon itself into a skein 21 the turns of which are compressed (Fig. 8) and given a length which is a little shorter than that of the cord holder 1.

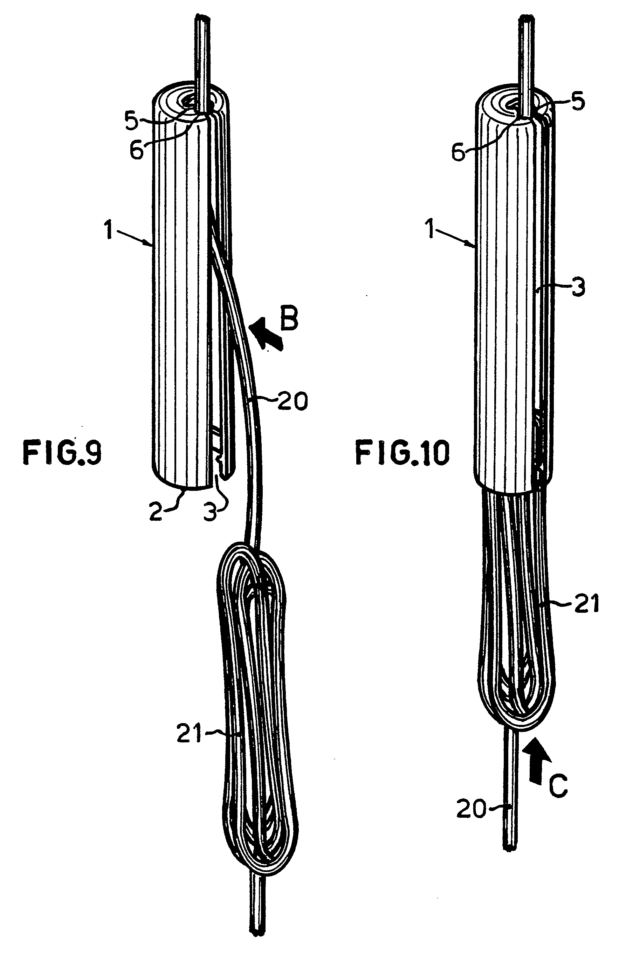

Subsequently the cord 20 is introduced into the longitudinal slot 3 and the radial slot 5 in which it is suitably positioned in the enlargement 6, as is shown in Fig. 9. After that portion of the cord, which is located immediately above the cord holder in Fig. 9, is pressed in into the shell 1 in the direction of the arrow B in Fig. 9. This operation may be carried out by pulling the skein 21 leftwards in Fig. 9.

In the next step the skein 21 is pushed upwards in the direction of the arrow C in Fig. 10 into the shell 1 until the skein in its entirety is located in the shell. After that one inserts the end cap 9 into the lower open end 2 of the shell 1 and in so doing snaps the upset 13 into engagement with the annular recess 12. Finally, the cord 20 is locked by being pushed into engagement with the edges of the inner, central ends 7 and 11 of the radial slots 5 and 10, respectively, at the opposite ends of the cord holder. The cord holder may hang vertically since the cord 20 is locked along the centre line of the shell 1.

The embodiment described above and illustrated in the drawings is, of course, to be regarded merely as a non-limiting example and may as to its details be modified in several ways within the scope of the following claims. Thus, it may be given an oval, triangular, square or polygonal cross section instead of being substantially circular-cylindrical as shown. It may also taper insignificantly to provide a relief at the manufacture. Finally the cord slack holder according to the invention is not restricted to electrical cords but may be used also in connection with non-electric cords, such as cables, ropes and wires.

## Claims

1. A surplus cord holder for storing a slack portion (21) of a cord (20) comprising a substantially tubular shell (1) having a longitudinal slot (3) extending from end to end of the tubular shell, and an end member (4) permanently secured to one end of the shell (1) and having a substantially radial slot (5) which forms a continuation of the slot (3) of the shell (1), said shell enclosing a single, essentially completely unobstructed, elongated, hollow space between its ends for storing the slack portion of said cord folded upon itself, characterized in that the other end (2) of the tubular shell is open for permitting introduction of a multiple-folded length of cord into the shell and has associated with it a removable end cap (9) adapted to be fitted on to said open end of the shell and having a substantially radial slot (10) extending to the circumference of the cap for forming a continuation of the longitudinal slot (3) of the shell (1) when positioned on said other end (2) of the shell in a predetermined position.

2. A cord holder according to claim 1, characterized in that said end member (4) constitutes an integral part of the shell (1).

3. A card holder according to claim 1, characterized in that the width of two adjacent portions of said radial slot are so dimensioned that one of said portions (6) of the end member (4) permits free passage of a cord with a predetermined thickness, and the slot margins of the other portion (7) frictionally engage the outer surface of said cord for retaining it in a selected position.

4. A cord holder according to claim 3, characterized in that said one portion (7) of the slot of said end member (4) constitutes the inner end of the slot (5) and is centrally located with respect to the end member.

5. A cord holder according to claim 1, characterized in that the inner end (11) of said substantially radial slot (10) of said end cap (9) is so dimensioned as to frictionally engage the outer surface of a cord having a predetermined thickness.

6. A cord holder according to claim 1, characterized in that the end cap (9) and the associated open end (2) of said shell (1) are each provided with mutually cooperating engagement means (12, 13) for retaining the end cap on the shell (1) when fitted thereto.

7. A cord holder according to any of the preceding claims, characterized by the provision of an associated, resilient or elastic clamping member (14) for holding the cord holder in a resilient grip having an arcuate or angular contour conforming to that of the outer surface of the shell (1) and having a circumferential extension exceeding half of that of the shell, said clamping member partially embracing the cord holder when affixed thereto, said clamping member having means for permitting its fastening to a carrying structure.

8. A cord holder according to claim 1, characterized in that the shell (1) has a substantially circular cross section.

**Patentansprüche**

1. Ueberschusshalter für Schnüre, Kabel, Leinen od.dgl. für die Aufbewahrung von einem schlaff hängenden Teil (21) einer Schnur od.dgl. (20), umfassend eine im wesentlichen röhrenförmige Hülse (1), die eine längslaufende Spalte (3) hat, die von einem Ende zum anderen der röhrenförmigen Hülse (1) verläuft, und ein Endglied (4), das an einem Ende der Hülse ständig befestigt ist und das eine im wesentlichen radiale Spalte (5) hat, die eine Fortsetzung von der Spalte (3) der Hülse (1) bildet, wobei die genannte Hülse zwischen ihren Enden einen einzigen, im wesentlichen vollständig unbehinderten, langgestreckten Hohlraum zur Aufbewahrung des zusammengelegten schlaff hängenden Teiles der Schnur einschliesst, dadurch gekennzeichnet, dass das andere Ende (2) der röhrenförmigen Hülse offen ist um die Einführung eines merfach zusammengelegten Stück Schnur in die Hülse zu ermöglichen, und dass dem anderen Ende ein abnehmbarer Enddeckel (9) zugeordnet ist, der zum Aufsetzen auf das offene Ende der Hülse angeordnet ist und eine im wesentlichen radiale Spalte (10) hat, die sich bis zum Umfang des Deckels erstreckt um eine Fortsetzung der langslaufenden Spalte (3) der Hülse (1) zu bilden, wenn er in einer vorbestimmten Lage an das genannte andere Ende (2) der Hülse angebracht ist.

2. Ueberschusshalter nach Anspruch 1, dadurch gekennzeichnet, dass das genannte Endglied (4) einen integrierenden Teil der Hülse (1) bildet.

3. Ueberschusshalter nach Anspruch 1, dadurch gekennzeichnet, dass die Breite von zwei einander naheliegenden Teilen der genannten radialen Spalte so bemessen ist, dass einer der Teile (6) des Endgliedes (4) freien Durchgang einer Schnur von vorbestimmter Dicke gestattet und die Kanten des anderen Teils (7) der Spalte die Aussenfläche der genannten Schnur mit Reibung greifen um die Schnur in einer gewählten Lage zu halten.

4. Ueberschusshalter nach Anspruch 3, dadurch gekennzeichnet, dass der genannte eine Teil (7) der Spalte des Endglieds (4) das innere Ende der Spalte (5) bildet und mit Bezug auf das Endglied mittig gelegen ist.

5. Ueberschusshalter nach Anspruch 1, dadurch gekennzeichnet, dass das innere Ende (11) der genannten, im wesentlichen radialen Spalte (10) des genannten Enddeckels (9) zum Greifen der Aussenfläche einer Schnur von vorbestimmter Dicke mit Reibung bemessen ist.

6. Ueberschusshalter nach Anspruch 1, dadurch gekennzeichnet, dass der Enddeckel (9) und das zugeordnete offene Ende (2) der Hülse (1) je mit gegenseitig zusammenwirkenden Eingriffsmitteln (12, 13) versehen sind um den Deckel an der Hülse (1) festzuhalten, wenn er daran angebracht ist.

7. Ueberschusshalter nach einem der vorhergehenden Ansprüche, gekennzeichnet durch eine zugeordnete, zum Halten des Schnurhalters in einem nachgiebigen Griff vorgesehene, nachgiebige oder elastische Klemmvorrichtung (14), die einen bogenförmigen oder eckigen, mit der Aussenfläche der Hülse (1) übereinstimmenden Umriss sowie auch eine Umfangsverlängerung hat, die die Hälfte des Umfangs der Hülse überschreitet, wobei die Klemmvorrichtung wenn an dem Schnurhalter angebracht denselben teilweise umfasst und ausserdem Mittel zum Ermöglichen ihrer Befestigung an einen Träger aufweist.

8. Ueberschusshalter nach Anspruch 1, dadurch gekennzeichnet, dass die Hülse (1) einen im wesentlichen kreisförmigen Durchschnitt hat.

**Revendications**

1. Porte-fil pour excédent de fil pour le rangement d'une partie de mou (21) d'un fil (20) comprenant une enveloppe (1) de forme substantiellement tubulaire possédant une fente longitudinale (3) s'étendant d'une extrémité à l'autre de l'enveloppe tubulaire, et un élément terminal (4) fixé de façon permanente à une des extrémités de l'enveloppe (1) et possédant une fente substantiellement radiale (5) formant la continuation de la fente (3) de l'enveloppe (1), ladite enveloppe enveloppant un seul espace essentiellement complètement dégagé, allongé, creux entre ses extrémités pour le rangement de la partie de mou dudit fil replié sur lui-même, caractérisé en ce que l'autre extrémité (2) de l'enveloppe tubulaire est libre pour permettre l'introduction d'une longueur de fil replié en plusieurs replis couchés dans l'enveloppe et possédant un capuchon (9) terminal amovible adapté pour la fixation à ladite extrémité libre de l'enveloppe et possédant une fente (10) substantiellement radiale s'étendant vers la circonférence du capuchon en formant la continuation de la fente longitudinale (3) de l'enveloppe (1) lorsqu'il est placé sur ladite autre extrémité (2) de l'enveloppe dans un position prédéterminée.

2. Porte-fil selon la revendication 1, caractérisé en ce que ledit élément terminal (4) fait partie intégrale de l'enveloppe (1).

3. Porte-fil selon la revendication 1, caractérisé en ce que la largeur de deux parties adjacentes de ladite fente radiale possède de telles dimensions qu'une desdites parties (6) de l'élément terminal (4) permette le passage libre d'un fil d'une épaisseur prédéterminée, et que les bords de l'autre partie (7) mettent les surfaces extérieure dudit fil en prise par friction afin de le retenir dans une position sélectionnée.

4. Porte-fil selon la revendication 3, caractérisé en ce que ladite partie (7) de la fente dudit élément terminal (4) constitue l'extrémité intérieure de la fente (5) et est placée centralement par rapport à l'élément terminal.

5. Porte-fil selon la revendication 1, caractérisé en ce que l'extrémité intérieure (11) de ladite fente substantiellement radiale (10) dudit capuchon (9) terminal possède de dimensions telles afin de réaliser une prise par friction de la surface extérieure d'un fil possédant une épaisseur prédéterminée.

6. Porte-fil selon la revendication 1, caractérisé en ce que le capuchon terminal (9) et l'extrémité libre (2) apparentée de ladite enveloppe (1) sont chacun équipés de moyens de prise (12, 13) coopérant mutuellement pour retenir le capuchon terminal sur l'enveloppe (1) lorsqu'il est placé sur celle-ci.

7. Porte-fil selon l'une des revendications précédentes, caractérisé en ce qu'il est pourvu d'un élément associé, résilient ou élastique de serrage (14) afin de maintenir le porte-fil dans une prise résiliente possédant un contour arqué ou angulaire se conformant avec celui de la surface extérieure de l'enveloppe (1) et possédant une extension circonférentielle dépassant de moitié celle de l'enveloppe, ledit élément de serrage englobant partiellement le porte-fil lorsqu'il est installé sur celui-ci, ledit élément de serrage possédant des moyens permettant sa fixation à une structure portante.

8. Porte-fil selon la revendication 1, caractérisé en ce que l'enveloppe (1) possède une section substantiellement circulaire.

FIG.1

FIG.2

FIG.3

FIG.4

FIG.5

FIG.8

FIG.7

FIG.6

FIG.9

FIG.10